Europäisches Patentamt

European Patent Office

Office européen des brevets

(19)

(11) Veröffentlichungsnummer: **0 187 276**
A2

# EUROPÄISCHE PATENTANMELDUNG

(12)

(21) Anmeldenummer: 85115559.8

(22) Anmeldetag: 06.12.85

(51) Int. Cl.⁴: **C 08 K 9/10**
C 08 L 27/18, C 08 J 3/20

(30) Priorität: 03.01.85 DE 3500061

(43) Veröffentlichungstag der Anmeldung:
16.07.86 Patentblatt 86/29

(84) Benannte Vertragsstaaten:
BE FR GB IT NL

(71) Anmelder: Norton Pampus GmbH
Am Nordkanal 37-43
D-4156 Willich 3(DE)

(72) Erfinder: Wölki, Peter
Am Kanert 39
D-4050 Mönchengladbach 4(DE)

(74) Vertreter: Patentanwaltsbüro Cohausz & Florack
Postfach 14 01 47
D-4000 Düsseldorf 1(DE)

(54) Verfahren zur Herstellung eines Werkstoffes.

(57) Die Erfinding betrifft ein Verfahren zur Herstellung eines Werkstoffs aus Polytetrafluoräthylen und aus in diesem eingelagerten Füllstoffpartikeln. Es lassen sich zwar die mechanischen Eigenschaften der meisten Kunststoffe durch das Einlagern von Füllstoffpartikeln verbessern. Versuche, in PTFE Füllstoffpartikel einzulagern, haben jedoch überraschenderweise eine Reduzierung wesentlicher mechanischer Eigenschaften (Zugfestigkeit, Reißdehnung) durch diese Einlagerung erkennen lassen. Dieser Nachteil wird erfindungsgemäß durch ein Verfahren vermieden, gemäß dem die Füllstoffpartikel vor der Einlagerung in Polytetrafluoräthylen mit einem als Haftvermittler dienenden, in der Schmelze relativ niedrig viskosen und/oder polaren Fluorkunststoff aus Perfluoralkoxy-Copolymer (PFA), Tetrafluoräthylen-Perfluorpropylen-Copoylmer (FEP) oder Mischungen davon beschichtet werden. Auf diese Weise läßt sich eine wesentliche Verbesserung der betreffenden Eigenschaften erzielen, die zumindest hinsichtlich einiger Eigenschaften 200 % überschreiten kann.

COHAUSZ & FLORACK

PATENTANWALTSBÜRO

SCHUMANNSTR. 97 D·4000 DÜSSELDORF 1

Telefon (0211) 68 33 46          Telex 08586513 cop d

PATENTANWÄLTE

Dipl.-Ing W. COHAUSZ · Dipl.-Ing R. KNAUF · Dipl.-Ing H. B. COHAUSZ · Dipl.-Ing D. H. WERNER

- 1 -

Norton Pampus GmbH
Am Nordkanal 37-43
4156 Willich 3

04.12.1985
WE/KA 7138A104

Verfahren zur Herstellung eines Werkstoffes

Die Erfindung betrifft ein Verfahren zur Herstellung eines Werkstoffes aus Polytetrafluoräthylen und aus in diesem eingelagerten Füllstoffpartikeln, die vor der Einlagerung mit einem als Haftvermittler dienenden, in der Schmelze relativ niedrig viskosen und/oder polaren Fluorkunststoff beschichtet werden.

Es ist bekannt, daß sich die mechanischen Eigenschaften der meisten Kunststoffe durch das Einlagern von geeigneten Füllstoffpartikeln verbessern lassen.

Man hat auch bereits versucht, in nichtschmelzbares Polytetrafluoräthylen (PTFE), Füllstoffpartikel einzulagern. Überraschenderweise hat sich hierbei ergeben, daß wesentliche mechanische Eigenschaften, wie beispielsweise die Zugfestigkeit und die Reißdehnung, durch das Einlagern der Füllstoffe reduziert werden. In welcher Weise sich die Eigenschaften des PTFE durch die Zugabe von Füllstoffen verändern, ist der Tendenz nach der folgenden Tabelle zu entnehmen:

| Eigenschaften | PTFE m. Glas | PTFE m. Kohle | PTFE m. Grafit | PTFE m. Bronze |
|---|---|---|---|---|
| Dichte | x | - | - | x |
| Druckfestigkeit | x | x | x | x |
| Druck-E-Modul | x | x | x | x |
| Abriebfestigkeit | x | x | x | x |
| Reibungskoeffizient | x | x | x | x |
| Temperatureinsatzbereich | O | O | O | O |
| Elektr.Durchschlag-festigkeit | - | - | - | - |
| Porosität | x | x | x | x |
| Reißfestigkeit | - | - | - | - |
| Reißdehnung | - | - | - | - |
| Streckspannung | - | - | - | - |
| Dehnung b.d.Streckgrenze | - | - | - | - |
| Zug-E-Modul | - | - | - | - |
| Biegefestigkeit | - | - | - | - |
| Biege-E-Modul | - | - | - | - |

(Zeichenerklärung: x = erhöht; - = reduziert;
O = unverändert

Das bekannt niedrige Niveau der mechanischen Festigkeitseigenschaften von PTFE-Compounds begrenzt die Anwendungs-möglichkeiten dieses - hinsichtlich seiner Chemikalienbe-ständigkeit, seiner hervorragenden elektrischen und dielektrischen Eigenschaften, seiner Antiadhäsivität, seiner Tem-peraturbeständigkeit und seiner ungewöhnlichen Gleiteigen-schaften - technisch besonders interessanten synthetischen Werkstoffes oder erfordert im Einzelfall besonders aufwendige konstruktive Gegenmaßnahmen.

Es war deshalb Aufgabe der vorliegenden Erfindung, die Herstellung eines Werkstoffes aus PTFE und Füllstoffpartikeln in einer solchen Weise zu vollziehen, daß durch die Zugabe der Füllstoffpartikel keine wesentliche Verschlechterung eines Teils der mechanischen Eigenschaften bewirkt wird und die chemischen, elektrischen, antiadhäsiven, thermischen und die Gleiteigenschaften des PTFE weitgehend erhalten bleiben.

Zur Lösung dieser Aufgabe wird erfindungsgemäß ein zur Herstellung eines derartigen Werkstoffes geeignetes Verfahren vorgeschlagen, nach dem als Haftvermittler Perfluoralkoxy-Copolymer (PFA), Tetrafluoräthylen-Perfluorpropylen-Copolymer (FEP) oder ein Gemisch aus diesen Substanzen verwendet wird.

Dabei ist ein Kennzeichen des in der Schmelze relativ niedrig viskosen PTFE, daß es aufgrund seines molekularen Aufbaues (verzweigte Ketten, eingelagerte Fremdatome) eine gewisse Polarität aufweisen, welche die Benetzungseigenschaften bzw. den Haftverbund begünstigen.

Das Polytetrafluoräthylen (Schmelzviskosität ca. $10^{10}$ Pa.s) bleibt auch dann noch gelförmig, wenn es der Erweichungstemperatur ausgesetzt ist bzw. wenn diese überschritten wird. Die Benetzungsfähigkeit eines derartigen Kunststoffes ist verhältnismäßig gering. Die Erfindung geht jetzt von der Erkenntnis aus, daß die Verschlechterung einiger mechanischer Eigenschaften durch Zugabe von Füllstoffpartikeln auf die geringe Benetzungsfähigkeit des PTFE zurückzuführen sein kann. Diese Erkenntnis hat sich bestätigt, denn durch die Anwendung des erfindungsgemäßen Verfahrens wird erreicht, daß in keinem Fall eine Verschlechterung mechanischer Eigenschaften auftritt, wenn Füllstoffpartikel zur Erhöhung der Druckbelastbarkeit hinzugegeben werden.

Der Haftvermittler ist ein schmelzbarer Kunststoff, der zumindest in der Schmelze eine relativ niedrige Viskosität hat, die beispielsweise $1,5.10^2$ bis $5.10^4$ Pa.s beträgt bzw. maximal etwa $5.10^9$ Pa.s beträgt. Als Haftvermittler werden demgemäß vorgesehen:

Perfluoralkoxy-Copolymer (PFA)
Tetrafluoräthylen-Perfluorpropylen-Copolymer (FEP)
oder Mischungen davon.

Vorteilhaft ist es erfindungsgemäß ferner, wenn der Haftvermittler in Form einer Dispersion oder eines Lackes vorliegt, in dem die Füllstoffpartikel getränkt werden.

Die getränkten Füllstoffpartikel können anschließend getrocknet und in Pulverform dem ebenfalls in Pulverform vorliegenden PTFE beigegeben werden. Bei der späteren Verarbeitung dieses Gemisches unter Einwirkung einer entsprechend hohen Temperatur, die die Erweichungstemperatur des PTFE erreichen oder überschreiten sollte, erfolgt dann die feste Einlagerung der mit dem Haftvermittler versehenen Füllstoffpartikel in das PTFE.

Zur Verbesserung der Haftfähigkeit wird weiterhin erfindungsgemäß vorgeschlagen, daß die Füllstoffpartikel vor dem Beschichten einer thermischen Vorbehandlung unterzogen werden. Werden Glasfasern als Füllstoffpartikel verwendet, so ist es zweckmäßig, diese zuvor zu entschlichten, das heißt das an den Fasern noch haftende Schlichtemittel zu entfernen. Derartige Schlichtemittel sind vielfach auf den Fasern vorhanden, um ihre anderweitige Verarbeitbarkeit zu verbessern.

Auch bei der Verwendung von hygroskopischen Füllstoffpartikeln empfiehlt sich eine thermische Vorbehandlung zum Zweck der Trocknung. Auch läßt sich gegebenenfalls eine Ausglasung von Spaltprodukten erzielen. Mit einer thermischen Vorbehandlung kann ferner eine Vergrößerung der Oberfläche der Füllstoffpartikel erreicht werden. Wenn hierzu beispielsweise Glimmer verwendet wird, so wird sich dieser unter Wärmeeinwirkung entsprechend aufspalten, was zu einer Vergrößerung der Oberfläche führt.

Wenn Füllstoffpartikel aus Metall, Glas oder keramischem Material verwendet werden, kann es erfindungsgemäß vorteilhaft sein, die Füllstoffpartikel vor dem Beschichten durch Ätzen beispielsweise mit Fluorwasserstoff-Säure aufzurauhen. Hierdurch läßt sich die Oberfläche der Füllstoffpartikel aktivieren und vergrößern.

Weiterhin kann es erfindungsgemäß vorteilhaft sein, wenn Füllstoffpartikel mit schlechten Hafteigenschaften vor dem Beschichten mit dem Haftvermittler mit einer Grundierung versehen werden, beispielsweise auf der Basis metallorganischer Verbindungen. Vorteilhaft ist auch die Verwendung handelsüblicher Fluorkunststofflacke oder -dispersionen, die bereits geeignete Grundierungsmittel enthalten.

Nachfolgend werden zur Erläuterung der Erfindung zwei Ausführungsbeispiele beschrieben.

Ausführungsbeispiel 1

a) Kurzglasfasern aus E-Glas mit einem Faserdurchmesser von ca. 15 µm und Verhältnis Länge : Durchmesser von ca. 1 : 100 bei einer Temperatur von 450 °C über 12 h thermisch entschlichten.

b) Ätzen der Glasfasern in 40%iger Fluorwasserstoffsäure bei 40 °C ca. 18 min.

c) Spülen der Glasfasern unter fließendem Wasser.

d) 2. Spülgang mit entsalztem Wasser.

e) Verdünnen handelsüblicher FEP-Dispersion auf einen Feststoffgehalt von 10 % mit entsalztem Wasser.

f) Einbringen der verdünnten FEP-Dispersion und der geätzten und gespülten Glasfaser in einem Taumelmischer. Mischzeit ca. 12 min.

g) Abfiltern des Wassers.

h) Trocknen der Mischung im Wärmeschrank bei 120 °C über 6 h. Abkühlen im Exsikkator.

i) Auflockern der FEP-getränkten Glasfasern im Wirbelmischer 1 min. bei 1400 $min^{-1}$.

j) Einbringen der getränkten und getrockneten Glasfasern in PTFE-Pulver in einem Wirbelmischer. Der Glasfaser-Anteil an der Gesamtmischung beträgt dabei 15 Massen-%.

k) Herstellen eines Probekörpers durch Pressen und Sintern.

l) Bestimmung physikalischer Eigenschaften des Probekörpers im Vergleich zu einem parallel gefertigten Probestab aus einem handelsüblichen PTFE-Compound mit 15 % Glasfasern.

Es zeigt sich, daß die Werte folgender Eigenschaften

- Reißfestigkeit
- Reißdehnung
- Streckgrenze
- Dehnung an der Streckgrenze
- Biege-E-Modul
- Zug-E-Modul
- Deformation unter Last
- Kugeldruckhärte

für das erfindungsgemäß hergestellte Halbzeug um jeweils 60 - 180 % günstiger liegen als bei dem Halbzeug, das aus handelsüblichem PTFE-Compound hergestellt wurde.

Ausführungsbeispiel 2

Glaskugeln mit einem mittleren Durchmesser von ca. 40 µm werden behandelt wie in Beispiel 1, jedoch mit dem Unterschied, daß nach dem zweiten Spülgang (Punkt d) die Glaskugeln mit einer Grundierung auf Basis einer metallorganischen Verbindung behandelt werden (im Tauchverfahren) und daß anstelle der FEP-Dispersion (Punkt e) eine PFA-Dispersion mit einem Feststoffgehalt von 20 Massen-% verwendet wird.

Die mechanischen Festigkeitseigenschaften liegen hier um 120 - 250 % günstiger als bei einem handelsüblichen PTFE-Compound mit 15 % Glaskugeln.

Patentansprüche

1. Verfahren zur Herstellung eines Werkstoffes aus Polytetrafluoräthylen und aus in diesem eingelagerten Füllstoffpartikeln, die vor der Einlagerung mit einem als Haftvermittler dienenden, in der Schmelze relativ niedrig viskosen und/oder polaren Fluorkunststoff beschichtet werden,
dadurch gekennzeichnet,
daß als Haftvermittler Perfluoralkoxy-Copolymer (PFA), Tetrafluoräthylen-Perfluorpropylen-Copolymer (FEP) oder ein Gemisch aus diesen Substanzen verwendet wird.

2. Verfahren nach Anspruch 1,
dadurch gekennzeichnet,
daß der Haftvermittler in Form einer Dispersion oder eines Lackes vorliegt, in dem die Füllstoffpartikel getränkt werden.

3. Verfahren nach Anspruch 2,
dadurch gekennzeichnet,
daß die getränkten Füllstoffpartikel getrocknet und in Pulverform dem ebenfalls in Pulverform vorliegenden Polytetrafluoräthylen beigegeben werden.

4. Verfahren nach einem der Ansprüche 1 bis 3,
dadurch gekennzeichnet,
daß die Füllstoffpartikel vor dem Beschichten einer thermischen Vorbehandlung unterzogen werden.

5. Verfahren nach einem der Ansprüche 1 bis 3, d a d u r c h   g e k e n n z e i c h n e t , daß Füllstoffpartikel aus Metall, Glas oder keramischem Material vor dem Beschichten durch Ätzen aufgerauht werden.

6. Verfahren nach einem der Ansprüche 1 bis 3, d a d u r c h   g e k e n n z e i c h n e t , daß Füllstoffpartikel mit schlechten Hafteigenschaften vor dem Beschichten mit dem Haftvermittler mit einer Grundierung versehen werden.